# FASCICULE DE BREVET EUROPEEN

(11) **EP 1 867 676 B1**
(45) Date de publication et mention de la délivrance du brevet: **16.03.2011**
(21) Numéro de dépôt: 06290987.4
(22) Date de dépôt: 16.06.2006
(51) Int. Cl.: C08J 9/00, C09J 163/00, B60R 13/08

(54) **Composition de mastic expansible pour le renforcement structural de corps creux métalliques**
Expandierbare Dichtungszusammensetzung zur Verstärkung von metallischen Hohlteilen
Expandable sealing composition for structurally reinforcing metallic hollow parts

(43) Date de publication de la demande: 19.12.2007
(73) Titulaire: HUTCHINSON, 75008 Paris (FR)
(72) Inventeur: Laborbe, Elise, 45200 Amilly (FR)
(74) Mandataire: Bolinches, Michel Jean-Marie

(56) Documents cités:
- WO-A-01/42358
- US-A- 5 043 211
- US-A1- 2004 101 689

## Description

La présente invention concerne une composition de mastic expansible ou expansée à chaud qui est utilisable pour le renforcement structural d'un corps creux métallique, un procédé de préparation de cette composition, un tel corps creux et une utilisation de cette composition. L'invention s'applique notamment à des panneaux de carrosserie de véhicules automobiles, aériens ou spatiaux.

De manière connue, on peut renforcer structuralement des corps creux métalliques, tels que des panneaux de carrosserie de véhicules automobiles, par des matériaux de type mousses rigides. Ces matériaux de renforcement sont usuellement constitués de compositions qui sont à base de résines époxydes et qui sont prévus expansibles sous l'effet de la chaleur, typiquement à une température allant de 160° C à 180° C, via un agent de gonflement qu'ils comprennent.
Parmi les principales propriétés recherchées pour ces mastics expansibles - en plus des propriétés d'adhésion au métal une fois la composition réticulée et expansée, de résistance au cisaillement et de résistance en compression - peuvent être cités leur collant « à cru » (« tack » en anglais, i.e. collant à l'état non durci), leur tenue au fluage vertical pendant l'opération de traitement thermique et une faible dureté. Après expansion, on recherche en outre un taux d'expansion maximal pour les mastics expansés, avec des cellules fermées pour avoir une absorption d'eau minimale.
Plus précisément, ces mastics expansibles sont usuellement à base de deux résines époxydes respectivement liquide et solide qui sont mélangées à une résine époxyde modifiée par un élastomère, tel qu'un caoutchouc nitrile (NBR). On pourra par exemple se référer au document EP-B-1 163 288 pour une description détaillée d'une composition utilisable pour un tel mastic expansible.

Un inconvénient majeur de ces compositions connues de mastics expansibles réside dans l'impossibilité d'obtenir simultanément pour celles-ci :
- à l'état non durci, une dureté suffisamment réduite qui favorise leur mise en oeuvre ultérieure et un collant « à cru » de niveau suffisant qui favorise leur adhésion à la paroi métallique des corps creux destiné à les recevoir, et
- à l'état expansé, un taux d'absorption d'eau suffisamment réduit.

Un autre inconvénient de ces compositions connues est qu'elles présentent souvent une grande sensibilité au type de tensioactif utilisé.

Le document WO-A1-01/42358 divulgue une composition de mastic selon le préambule de la revendication 1 annexée à la présente description.

Le document US-A1-2004/0101689 présente une composition de durcisseur pour résine époxyde comprenant notamment un copolymère à blocs styrène-butadiène-méthacrylate de méthyle à titre d'agent stabilisant.

Un but de la présente invention est de remédier à ces inconvénients, et ce but est atteint en ce que la Demanderesse vient de découvrir d'une manière surprenante que l'incorporation à une composition de mastic expansible à chaud à base d'au moins une résine époxyde, d'un copolymère à blocs choisi dans le groupe constitué par les copolymères de formule SBM et de formule MAM, où S, B, M et A désignent respectivement un bloc polymère issu d'un monomère vinylaromatique, tel que le styrène, un bloc polybutadiène-1,4, un bloc polyméthacrylate de méthyle majoritairement syndiotactique et un bloc acrylate de butyle, permet d'obtenir une composition qui présente notamment en comparaison des compositions connues, à l'état non durci, une dureté diminuée et un caractère collant augmenté vis-à-vis des matériaux métalliques et, à l'état expansé, un taux d'absorption d'eau réduit, ce qui rend les compositions de l'invention utilisables pour un renforcement structural satisfaisant d'un corps creux métallique.

On notera que l'aptitude à la mise en oeuvre optimisée, le « tack » mastic/ métal amélioré et l'absorption d'eau réduite qui sont conférées à cette composition selon l'invention par le(s)dit(s) copolymère(s) à bloc(s) sont obtenues sans pénaliser la tenue au fluage vertical de ladite composition, qui est sensiblement du même ordre que celle obtenue avec les compositions de l'art antérieur.

A titre de monomère vinylaromatique dont est issu le bloc S, on peut par exemple utiliser le styrène, l'alpha-méthyl styrène ou le vinyltoluène. De préférence, ce bloc S est issu du styrène et, à titre encore plus préférentiel, ce bloc S est constitué de polystyrène.

Selon un premier mode de réalisation de l'invention, ledit ou l'un au moins desdits copolymère(s) à blocs répond à la formule SBM, où S, B et M désignent respectivement un bloc polystyrène, un bloc polybutadiène-1,4 et un bloc polyméthacrylate de méthyle majoritairement syndiotactique.

Ainsi, la composition selon ce premier mode de l'invention peut comprendre un copolymère tribloc polystyrène - polybutadiène-1,4 - polyméthacrylate de méthyle syndiotactique et, de préférence un copolymère tribloc SBM commercialisé par la société ARKEMA sous la dénomination Nanostrength®.

Selon un second mode de réalisation de l'invention, ledit ou l'un au moins desdits copolymère(s) à blocs répond à la formule MAM, où M et A désignent respectivement un bloc polyméthacrylate de méthyle majoritairement syndiotactique et un bloc acrylate de butyle.
Ainsi, la composition selon ce second mode de l'invention peut comprendre un copolymère tribloc polyméthacrylate de méthyle syndiotactique - polyacrylate de butyle - polyméthacrylate de méthyle syndiotactique et, de préférence un copolymère tribloc MAM commercialisé par la société ARKEMA sous la dénomination Nanostrength®.

Avantageusement, ladite composition selon l'invention comprend le(s)dit(s) copolymère(s) à blocs selon une quantité (pcr : parties en poids pour cent parties de résine(s)époxyde(s)) comprise entre 10 pcr et 60 pcr et, encore plus avantageusement, comprise entre 15 pcr et 30 pcr.

Selon une autre caractéristique de l'invention, ladite composition comprend au moins une résine époxyde de type liquide (i.e. ladite résine époxyde ou l'une au moins desdites résines époxydes est de type liquide), le ratio massique résine(s) époxyde(s) liquide(s) / résine(s) époxyde(s) solide(s) pouvant être compris entre 100/0 et 30/70.
Avantageusement, ladite composition est dépourvue de toute résine époxyde de type solide (i.e. ladite ou chaque résine époxyde de la composition est de type liquide).
On notera que l'utilisation préférentielle selon l'invention d'une ou de résine(s) époxyde(s) liquide(s) (i.e. sans résine époxyde solide) permet de minimiser encore la dureté et le collant à l'état non durci de ladite composition, de telle sorte que l'aptitude à la mise en oeuvre et le « tack » de ladite composition s'en trouvent encore améliorés.
Avantageusement, ladite composition peut ainsi présenter, à l'état non durci, une dureté Shore A qui est inférieure à 10 et, de préférence sensiblement égale à 0, et un fort caractère collant à la température ambiante vis-à-vis de matériaux métalliques, de telle sorte qu'elle adhère d'une manière satisfaisante audit corps creux métallique.

De préférence, ladite ou chaque résine époxyde est issue du bisphénol A ou F et, à titre encore plus préférentiel, ladite ou chaque résine époxyde est une résine diglycidyl éther de bisphénol A (« DGEBA » en abrégé).

Avantageusement, ladite composition selon l'invention peut comprendre différents types de tensioactifs, sans que ces derniers n'influent sur ses propriétés et, selon un exemple de réalisation de l'invention, elle peut être dépourvue de tensioactif.
Selon une autre caractéristique de l'invention, ladite composition peut comprendre, à l'état expansé, des cellules fermées et un taux d'absorption d'eau à 180° C qui est inférieur ou égal à 5 %, ce qui se traduit avantageusement par une absorption d'eau minimale en utilisation.

Un procédé de fabrication selon l'invention de ladite composition de mastic expansée comprend :
a) un malaxage thermomécanique de la composition expansible, laquelle comprend en outre :
   * un agent de gonflement (par exemple de type azodicarbonamide activé, selon une quantité pouvant varier de 1 à 4 pcr),
   * un agent de durcissement (par exemple de type dicyandiamide activé, selon une quantité pouvant varier de 5 à 15 pcr), et
   * une ou plusieurs charge(s) minérale(s) selon une quantité totale pouvant aller de 20 à 80 pcr et qui sont par exemple choisies parmi les silices, l'alumine trihydratée, l'hydroxyde de magnésium, le kaolin, les argiles, la craie et leurs mélanges ;
b) un façonnage de la composition expansible obtenue (e.g. par extrusion, injection, compression, etc.), puis
c) une expansion de la composition façonnée, par chauffage dans un four et au contact dudit corps creux métallique, par exemple par cataphorèse, pour l'obtention de la composition expansée.
   On notera que les compositions selon l'invention comprennent également, outre ledit agent de gonflement, ledit agent de durcissement et ladite ou lesdites charge(s), tout ou partie des autres ingrédients habituellement utilisés dans les compositions de mastic expansibles.

Un corps creux métallique selon l'invention est rempli d'un élément de renforcement structural à base de ladite composition de mastic expansée à chaud selon l'invention telle que définie ci-dessus.
Selon une autre caractéristique de l'invention, ledit corps creux peut être destiné à former un panneau de carrosserie d'un véhicule automobile, aérien ou spatial qui est rempli par ledit élément de renforcement structural, lequel peut alors présenter une forme de feuille.
Une utilisation selon l'invention de ladite composition expansible ou expansée concerne la fabrication d'articles ou semi-finis pour le renforcement structural et/ou l'isolation phonique de corps creux métalliques.
Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES

On a préparé cinq compositions de mastic A, B, C, D et E expansibles non conformes à l'invention (i.e. selon l'état antérieur de la technique) qui sont chacune à base d'un mélange de deux résines époxydes respectivement solide et liquide de type « DGEBA» qui comprennent chacune en outre de manière connue un flexibilisant de type résine époxyde « DGEBA » modifiée par un caoutchouc nitrile (cette résine est commercialisée sous la dénomination « Struktol Polydis 3604 »).

On a également préparé six compositions I1, I2, I3, I4, I5 et I6 expansibles selon l'invention qui sont chacune à base d'une unique résine époxyde liquide et qui comprennent chacune, en lieu et place de cette résine modifiée, un copolymère à blocs répondant à la formule MAM précitée et commercialisé par ARKEMA sous la dénomination Nanostrength® (tribloc méthacrylate de méthyle - acrylate de butyle - méthacrylate de méthyle).
Chacune de ces compositions A à E et I1 à I6 comprend en outre notamment un même agent gonflant constitué d'un azodicarbonamide activé, un même durcisseur de type dicyandiamide activé et une même charge de dilution qui est majoritairement à base de silice et d'alumine trihydratée (« ATH » en abrégé) et qui comprend en outre une argile.
Plus précisément, les compositions A, B, C, D et I1, I2, I3, I4 comprennent également, à titre de tensioactif, un même tensioactif T1 de type silicone polyéther, alors que les compositions E et 15 sont dépourvues de tensioactif et que la composition 16 comprend un tensioactif T2 de type polybutadiène liquide hydroxylé.
On a par ailleurs fait varier, pour ces compositions A à E :
- le ratio massique des résines époxydes solide/ liquide (ce ratio étant de 60/40 pour les compositions A, B et E et à l'inverse de 40/60 pour les compositions C et D), et
- la quantité d'agent de gonflement (soit 3,5 pcr, soit 1,9 pcr).
   On a préparé ces compositions expansibles A à E et 11 à 16 en mettant en oeuvre un même procédé de malaxage thermomécanique pour chacune de ces compositions, puis on a façonné chaque composition expansible ainsi obtenue via compression puis découpe à façon.
   On a ensuite procédé à l'expansion des compositions expansibles ainsi façonnées par un chauffage dans un four (à deux températures d'environ 160° C et 180° C). Pour chaque composition, on a fait chauffer « librement » certains échantillons sur un papier anti-adhésif, et d'autres au contact de tôles destinées à former un corps creux rempli de la composition expansée correspondante (ces tôles sont constituées d'acier brut, galvanisé ou électrozingué).

Les compositions A à E présentent les formulations suivantes (pcr : parties en poids pour 100 parties de résine(s) époxyde(s)) :

**Tableau 1 :**

| | A | B | C | D | E |
|---|---|---|---|---|---|
| Ratio massique résines « DGEBA » solide/ liquide | 60/40 | 60/40 | 40/60 | 40/60 | 60/40 |
| Agent gonflant (pcr) | 3,5 | 1,9 | 3,5 | 1,9 | 1,9 |
| **Flexibilisant « Struktol Polydis 3604 » (pcr)** | **30** | **30** | **30** | **30** | **30** |
| Durcisseur (pcr) | 8,6 | 8,6 | 8,6 | 8,6 | 8,6 |
| Charges minérales (pcr) | 61,4 | 61,4 | 61,4 | 61,4 | 61,4 |
| Tensioactif T1 (pcr) | 2,1 | 2,1 | 2,1 | 2,1 | - |

Les compositions 11 à 16 selon l'invention présentent les formulations suivantes (pcr: parties en poids pour 100 parties de résine(s) époxyde(s)) :

**Tableau 2 :**

| | I1 | I2 | I3 | I4 | I5 | I6 |
|---|---|---|---|---|---|---|
| **Ratio massique résines** « **DGEBA » solide/ liquide** | **0/100** | **0/100** | **0/100** | **0/100** | **0/100** | **0/100** |
| Agent gonflant (pcr) | 1,9 | 1,9 | 1,9 | 1,9 | 1,9 | 1,9 |
| Flexibilisant « Struktol Polydis 3604 » (pcr) | - | - | - | - | - | - |
| **Copolymère tribloc MAM poudre Nanostrength® (pcr)** | **20** | **20** | **20** | **20** | **20** | **20** |
| Durcisseur (pcr) | 13,8 | 13,8 | 11,4 | 11,4 | 13,8 | 13,8 |
| Charges minérales (pcr) | 61,3 | 71,8 | 61,3 | 71,8 | 71,8 | 71,8 |
| Tensioactif T1 ou T2 (pcr) | T1 2,1 | T1 2,1 | T1 2,1 | T1 2,1 | - | T2 2,1 |

On a procédé à des mesures de chaque composition A à E et 11 à 16 ainsi préparée, tant à l'état expansible et non durci (densité initiale, résistance au fluage vertical à chaud (160° C), dureté Shore A et collant « à cru ») qu'à l'état expansé (expansion volumique à 160° C et à 180° C, densité finale, taux d'absorption d'eau à 160° C et à 180° C).

Pour mesurer la résistance au fluage vertical, on a procédé de la manière suivante.
On a appliqué manuellement et avec une légère pression un échantillon du mastic « cru » (40 x 40 x 5 mm) sur une tôle métallique, et l'on a repéré la position initiale (pᵢ) de ce mastic. On a ensuite suspendu verticalement cette tôle dans une étuve, pendant 30 minutes à 160° C. Après sortie du four et refroidissement de la plaque ainsi obtenue à température ambiante (23° C), on a repéré la position finale (p_{f}) du mastic expansé. La résistance au fluage est mesurée par le déplacement vertical du mastic pendant l'étape de chauffage : d = p_{f} - pᵢ (en mm).
Pour mesurer la dureté Shore A du mastic « à cru », on a procédé selon la norme ISO 868.
Pour caractériser le caractère collant « à cru » de chaque composition vis-à-vis des tôles au contact desquelles est réalisée l'expansion (évaluation du « tack »), on a distingué quatre niveaux 0, 1, 2 et 3 représentant un caractère collant respectivement très faible, moyen, fort et très fort.
Les tableaux 3 et 4 ci-après donnent les résultats obtenus, respectivement pour les compositions A à E non conformes à l'invention et pour les compositions I1 à I6 selon l'invention.

**Tableau 3 :**

| | A | B | C | D | E |
|---|---|---|---|---|---|
| Densité initiale | 1,32 | 1,32 | 1,31 | 1,31 | 1,32 |
| Expansion volumique à 160° C (%) | 111 | 100 | 108 | 94 | 78 |
| Densité finale | 0,62 | 0,66 | 0,63 | 0,68 | 0,75 |
| Taux d'absorption d'eau à 160° C (%) | 13 | 3 | 26 | 10 | 1 |
| Taux d'absorption d'eau à 180°C(%) | 32 | 8 | 38 | 35 | 2 |
| Expansion volumique à 180° C (%) | 137 | 119 | 118 | 117 | 90 |
| **Résistance au fluage vertical (d en mm)** | **7** | **8** | **6** | **8** | **34** |
| **Dureté Shore A « à cru » (e = 5 mm)** | **48** | **45** | **Non mesurable** | **6** | **-** |
| **Collant « à cru » à T ambiante (environ 20° C)** | **≈ 0** | **≈ 0** | **2** | **2** | **≈ 0** |

**Tableau 4 :**

| | I1 | I2 | I3 | I4 | I5 | I6 |
|---|---|---|---|---|---|---|
| Densité initiale | 1,21 | 1,23 | 1,21 | 1,24 | 1,24 | 1,29 |
| Expansion volumique à 160°C(%) | 93 | 99 | 92 | 98 | 127 | 131 |
| Densité finale | 0,62 | 0,62 | 0,62 | 0,62 | 0,54 | 0,56 |
| Taux d'absorption d'eau à 160° C (%) | 3 | 3 | 3 | 3 | 2 | 2 |
| Taux d'absorption d'eau à 180° C (%) | 4 | 4 | 3 | 4 | 3 | 3 |
| Expansion volumique à 180° C (%) | 110 | 112 | 110 | 113 | 153 | 166 |
| **Résistance au fluage vertical (d en mm)** | **7** | **7** | **12** | **7** | **7** | **8** |
| **Dureté Shore A « à cru » (e = 5 mm)** | **Non mesurable** | **Non mesurable** | **Non mesurable** | **Non mesurable** | **Non mesurable** | **Non mesurable** |
| **Collant « à cru » à T ambiante (environ 20° C)** | **3** | **3** | **3** | **3** | **3** | **3** |

Le tableau 3 montre que, parmi les compositions A à E non conformes à l'invention, seule la composition B présente un compromis de propriétés d'expansion qui se rapprochent de celles souhaitées. On notera toutefois que cette composition B présente un taux d'absorption d'eau à 180° C qui n'est pas satisfaisant, étant trop élevé (égal à 8 %), ainsi qu'une dureté Shore A « à cru » qui est également trop élevée (égale à 45) et un collant « à cru » vis-à-vis desdites tôles qui est insuffisant (de niveau ≈ 0).
On notera d'une manière générale qu'aucune de ces compositions A à E ne présente un collant « à cru » satisfaisant vis-à-vis de ces tôles, ni une dureté Shore A « à cru » moyenne suffisamment faible (i.e. proche de 0) ni, dans le même temps, des propriétés d'absorption d'eau satisfaisantes (i.e. d'absorption minimale).

Le tableau 4 montre que toutes les compositions 11 à 16 selon l'invention présentent non seulement des propriétés d'expansion satisfaisantes, mais encore, en comparaison avec les compositions A à E :
- un collant « à cru » nettement augmenté (toujours de niveau 3, i.e. maximal), ce qui témoigne d'une adhésion améliorée du mastic selon l'invention vis-à-vis du matériau métallique à son contact,
- une dureté Shore A « à cru » minimisée (de l'ordre de 0), ce qui représente une amélioration significative de l'aptitude à la mise en oeuvre des compositions 11 à 16 et cela quel que soit le procédé de façonnage utilisé,
- un taux d'absorption d'eau nettement réduit tant à 160° C qu'à 180° C (ce taux est en moyenne de 3 % pour les compositions 11 à 16, contre 10,6 % et 23 % pour les taux moyens des compositions A à E à 160° C et à 180° C, respectivement, soit une réduction moyenne de ce taux pour les compositions 11 à 16 qui est égale ou supérieure à 70 %), et
- un fluage vertical préservé (similaire ou même inférieur à celui des compositions A à E).

En particulier, il ressort de ces tableaux 3 et 4 que la composition I5 selon l'invention qui est dépourvu de tensioactif présente, en comparaison de la composition E non conforme à l'invention qui est également dépourvue de tensioactif :
- un taux d'expansion très supérieur à celui de cette composition E (supérieur de 63 % à 160° C et supérieur de 70 % à 180° C),
- un fluage vertical très réduit par rapport à celui de cette composition E (diminué de près de 80 %),
- un collant « à cru » nettement amélioré vis-à-vis du matériau métallique des tôles (niveau 3 au lieu de ≈ 0), et
- un taux d'absorption d'eau qui est sensiblement préservé par rapport à celui de cette composition E (tant à 160° C qu'à 180° C).

Il ressort également du tableau 4 que la nature du tensioactif utilisé (e.g. silicone polyéther ou polybutadiène liquide) n'influe quasiment pas sur les propriétés des compositions selon l'invention, comme le montrent l'ensemble des propriétés d'expansion, d'absorption d'eau, de tenue au fluage vertical, de dureté et de collant de la composition 16 en comparaison de celles des compositions I1 à I4.

On notera enfin que l'association d'une unique résine époxy spécifiquement liquide au copolymère tribloc de formule MAM ou SBM selon l'invention permet notamment de minimiser la dureté « à cru » et de maximiser le collant « à cru » des compositions selon l'invention correspondantes vis-à-vis dudit matériau métallique, ce qui rend ces dernières particulièrement avantageuses pour le renforcement structural de corps creux métalliques, tels que des panneaux de carrosserie de véhicules automobiles, aériens ou spatiaux.

## Revendications

1. Composition de mastic expansible ou expansée à chaud qui est utilisable pour le renforcement structural d'un corps creux métallique, ladite composition étant à base d'au moins une résine époxyde, **caractérisée en ce que** ladite composition comprend également au moins un copolymère à blocs choisi dans le groupe constitué par les copolymères de formule SBM et de formule MAM, où S, B, M et A désignent respectivement un bloc polymérique majoritairement issu d'un monomère vinylaromatique, tel que le styrène, un bloc polymérique majoritairement issu du butadiène, un bloc polyméthacrylate de méthyle majoritairement syndiotactique et un bloc polymérique majoritairement issu d'un acrylate de butyle.

2. Composition selon la revendication 1, **caractérisée en ce qu'**elle comprend le(s)dit(s) copolymère(s) à blocs selon une quantité (pcr: parties en poids pour cent parties de résine(s) époxyde(s)) comprise entre 10 pcr et 60 pcr.

3. Composition selon la revendication 2, **caractérisée en ce qu'**elle comprend le(s)dit(s) copolymère(s) à blocs selon une quantité comprise entre 15 pcr et 30 pcr.

4. Composition selon une des revendications précédentes, **caractérisée en ce qu'**elle comprend au moins une résine époxyde de type liquide, le ratio massique résine(s) époxyde(s) liquide(s) / résine(s) époxyde(s) solide(s) étant compris entre 100/0 et 30/70.

5. Composition selon la revendication 4, **caractérisée en ce qu'**elle est dépourvue de résine époxyde de type solide.

6. Composition selon une des revendications précédentes, **caractérisée en ce que** ladite ou chaque résine époxyde est issue du bisphénol A ou F.

7. Composition selon la revendication 6, **caractérisée en ce que** ladite ou chaque résine époxyde est une résine diglycidyl éther de bisphénol A.

8. Composition selon une des revendications précédentes, **caractérisée en ce qu'**elle est dépourvue de tensioactif.

9. Composition selon une des revendications précédentes, **caractérisée en ce qu'**elle présente, à l'état non durci, une dureté Shore A qui est inférieure à 10 et, de préférence, sensiblement égale à 0.

10. Composition selon une des revendications précédentes, **caractérisée en ce qu'**elle est collante vis-à-vis de matériaux métalliques à la température ambiante et à l'état non durci.

11. Composition selon une des revendications précédentes, **caractérisée en ce qu'**elle comprend, à l'état expansé, des cellules fermées et un taux d'absorption d'eau à 180° C qui est inférieur ou égal à 5 %.

12. Procédé de fabrication d'une composition expansée selon une des revendications précédentes, **caractérisé en ce qu'**il comprend :
- un malaxage thermomécanique de la composition expansible, laquelle comprend en outre un agent de gonflement, un agent de durcissement et une ou plusieurs charge(s) minérale(s),
- un façonnage de la composition expansible obtenue, puis
- une expansion par chauffage de la composition façonnée au contact dudit corps creux métallique, pour l'obtention de la composition expansée.

13. Corps creux métallique rempli d'un élément de renforcement structural à base d'une composition de mastic expansée à chaud, **caractérisé en ce que** ladite composition est telle que définie à l'une des revendications 1 à 11.

14. Corps creux selon la revendication 13, **caractérisé en ce qu'**il est destiné à former un panneau de carrosserie d'un véhicule automobile, aérien ou spatial qui est rempli par ledit élément de renforcement structural, lequel présente une forme de feuille.

15. Utilisation d'une composition selon une des revendications 1 à 11, pour la fabrication d'articles ou de semi-finis pour le renforcement structural et/ou l'isolation phonique de corps creux métalliques.

## Claims

1. Hot-expandable or -expanded mastic composition which can be used for the structural reinforcement of a hollow metal body, said composition being based on at least one epoxy resin, **characterized in that** said composition also comprises at least one block copolymer chosen from the group consisting of copolymers of formula SBM and of formula MAM, where S, B, M and A respectively denote a polymeric block predominantly derived from a vinylaromatic monomer, such as styrene, a polymeric block predominantly derived from butadiene, a predominantly syndiotactic poly(methyl methacrylate) block and a polymeric block predominantly derived from a butyl acrylate.

2. Composition according to Claim 1, **characterized in that** it comprises said block copolymer(s) according to an amount (phr: parts by weight per hundred parts of epoxy resin(s)) of between 10 phr and 60 phr.

3. Composition according to Claim 2, **characterized in that** it comprises said block copolymer(s) according to an amount of between 15 phr and 30 phr.

4. Composition according to one of the preceding claims, **characterized in that** it comprises at least one epoxy resin of liquid type, the liquid epoxy resin (s) / solid epoxy resin(s) mass ratio being of between 100/0 and 30/70.

5. Composition according to Claim 4, **characterized in that** it is devoid of epoxy resin of solid type.

6. Composition according to one of the preceding claims, **characterized in that** said or each epoxy resin is derived from bisphenol A or F.

7. Composition according to Claim 6, **characterized in that** said or each epoxy resin is a diglycidyl ether of bisphenol A resin.

8. Composition according to one of the preceding claims, **characterized in that** it is devoid of surfactant.

9. Composition according to one of the preceding claims, **characterized in that** it has, in the uncured state, a Shore A hardness which is less than 10, and preferably substantially equal to 0.

10. Composition according to one of the preceding claims, **characterized in that** it is tacky with respect to metal materials at ambient temperature and in the uncured state.

11. Composition according to one of the preceding claims, **characterized in that** it comprises, in the expanded state, closed cells and a degree of water absorption at 180°C which is less than or equal to 5%.

12. Process for manufacturing an expanded composition according to one of the preceding claims, **characterized in that** it comprises:
- thermomechanical mixing of the expandable composition, which also comprises a swelling agent, a curing agent and one or more mineral filler(s),
- forming of the expandable composition obtained, and then
- expansion by heating of the formed composition in contact with said hollow metal body, in order to obtain the expanded composition.

13. Hollow metal body filled with a structural reinforcement element based on a hot-expanded mastic composition, **characterized in that** said composition is as defined in one of Claims 1 to 11.

14. Hollow body according to Claim 13, **characterized in that** it is intended to form a body panel for a motor vehicle, an airborne vehicle or a space vehicle, which is filled with said structural reinforcement element, which is in the shape of a sheet.

15. Use of a composition according to one of Claims 1 to 11, for the manufacture of items or semifinished products for the structural reinforcement and/or the sound insulation of hollow metal bodies.

## Patentansprüche

1. Heiß verschäumbare oder verschäumte Mastixzusammensetzung, die zur Strukturverstärkung eines metallischen Hohlkörpers verwendet werden kann, wobei die Zusammensetzung auf wenigstens einem Epoxidharz basiert, **dadurch gekennzeichnet, dass** die Zusammensetzung ferner wenigstens ein Block-Copolymer umfasst, ausgewählt aus der Gruppe bestehend aus Copolymeren der Formel SBM und der Formel MAM, wobei S, B, M und A einen Polymerblock, der überwiegend von einem vinylaromatischen Monomer wie Styrol stammt, einen Polymerblock, der überwiegend von Butadien stammt, einen überwiegend syndiotaktischen Polymethylmethacrylatblock bzw. einen Polymerblock, der überwiegend von einem Butylacrylat stammt, bezeichnen.

2. Zusammensetzung nach Anspruch 1, **dadurch gekennzeichnet, dass** sie das (die) Block-Copolymer(e) in einer Menge (pcr: Gewichtsteile pro hundert Teile Epoxidharz(e)) zwischwn 10 pcr und 60 pcr umfasst.

3. Zusammensetzung nach Anspruch 2, **dadurch gekennzeichnet, dass** sie das (die) Block-Copolymer(e) in einer Menge zwischen15 pcr und 30 pcr umfasst.

4. Zusammensetzung nach einem der vorhergehenden Ansprüche, **dadurch gekennzeichnet, dass** sie wenigstens ein flüssiges Epoxidharz umfasst, wobei das Masseverhältnis von flüssigem(n) Epoxidharz(en)/festem(n) Epoxidharz(en) zwischen 100/0 und 30/70 liegt.

5. Zusammensetzung nach Anspruch 4, **dadurch gekennzeichnet, dass** sie frei von festem Epoxidharz ist.

6. Zusammensetzung nach einem der vorhergehenden Ansprüche, **dadurch gekennzeichnet, dass** das oder jedes Epoxidharz von Bisphenol A oder F stammt.

7. Zusammensetzung nach Anspruch 6, **dadurch gekennzeichnet, dass** das oder jedes Epoxidharz ein Bisphenol A-Diglycidylether-Harz ist.

8. Zusammensetzung nach einem der vorhergehenden Ansprüche, **dadurch gekennzeichnet, dass** sie frei von Tensid ist.

9. Zusammensetzung nach einem der vorhergehenden Ansprüche, **dadurch gekennzeichnet, dass** sie im ungehärteten Zustand eine Shore-A-Härte unter 10 und vorzugsweise von etwa 0 aufweist.

10. Zusammensetzung nach einem der vorhergehenden Ansprüche, **dadurch gekennzeichnet, dass** sie bei Umgebungstemperatur und im ungehärteten Zustand an metallischen Materialien anhaften kann.

11. Zusammensetzung nach einem der vorhergehenden Ansprüche, **dadurch gekennzeichnet, dass** sie im verschäumten Zustand geschlossene Zellen und einen Absorptionsgrad von Wasser bei 180 °C von unter oder gleich 5 % hat.

12. Verfahren zur Herstellung einer verschäumten Zusammensetzung nach einem der vorhergehenden Ansprüche, **dadurch gekennzeichnet, dass** es umfasst:
- thermomechanisches Mischen der verschäumbaren Zusammensetzung, die außerdem ein Blähmittel, einen Härter und einen oder mehrere mineralische Füllstoffe umfasst,
- Formen der erhaltenen verschäumbaren Zusammensetzung, und dann
- Verschäumen durch Erwärmen der geformten Zusammensetzung in Kontakt mit dem metallischen Hohlkörper zum Erhalt der verschäumten Zusammensetzung.

13. Metallischer Hohlkörper, der mit einem Strukturverstärkungselement auf Basis einer heiß verschäumten Mastixzusammensetzung gefüllt ist, **dadurch gekennzeichnet, dass** die Zusammensetzung wie in einem der Ansprüche 1 bis 11 definiert ist.

14. Hohlkörper nach Anspruch 13, **dadurch gekennzeichnet, dass** er zur Bildung eines Karosserieteils für ein Kraft-, Luft- oder Raumfahrzeug vorgesehen ist, das mit dem Strukturverstärkungselement gefüllt ist, das folienförmig ist.

15. Verwendung einer Zusammensetzung nach einem der Ansprüche 1 bis 11 zur Herstellung von Produkten oder Halbfertigprodukten zur Strukturverstärkung und/oder Schallisolierung von metallischen Hohlkörpern.
